# EUROPÄISCHE PATENTSCHRIFT

(11) **EP 2 123 738 B1**
(45) Veröffentlichungstag und Bekanntmachung des Hinweises auf die Patenterteilung: **03.08.2011**
(21) Anmeldenummer: 08102299.8
(22) Anmeldetag: 05.03.2008
(51) Int. Cl.: C10M 111/04, C10M 169/04, B29C 33/60, B29C 33/62, C10N 40/36

(54) **Trennmittel**
Separating agent
Agent antiadhérent

(30) Priorität: 29.01.2008 DE 102008006614
(43) Veröffentlichungstag der Anmeldung: 25.11.2009
(73) Patentinhaber: Riepe, Angelika, 32257 Bünde (DE); Riepe, Hans, 32257 Bünde (DE)
(72) Erfinder:
(74) Vertreter: Dantz, Jan Henning

(56) Entgegenhaltungen:
- EP-A1- 1 508 804
- DE-B3- 10 343 441
- US-A1- 2004 209 099

## Beschreibung

Die Erfindung betrifft ein Trennmittel gemäß dem Oberbegriff des Anspruchs 1.

Um ein Anhaften von bei einer Kantenbeschichtung einer vorzugsweise Möbelplatte seitlich austretenden Leim- oder Klebstoffresten an der Oberfläche der Platte zu verhindern, ist es bekannt, ein flüssiges Trennmittel auf die entsprechenden Randbereiche der Platte aufzutragen, so dass eine nachträgliche Säuberung, üblicherweise mittels Reinigungsscheiben, problemlos möglich ist.

Neben verdampfbaren Lösemitteln weisen diese Trennmittel als fluide Träger Mineralöle auf, die eine Reihe von Nachteilen besitzen.

Hierzu gehört insbesondere der relativ niedrige Siedebereich bzw. Flammpunkt, durch den ein Einsatz der Trennmittel beispielsweise in sogenannten Heißzonen, in denen die Platte vor einer Anleimung eines Kantenbandes erwärmt wird, vor allem aus Sicherheits- bzw. Arbeitsschutzgründen sehr problematisch ist.

Daneben sind die bekannten flüssigen Trennmittel auch eher ungeeignet für den Einsatz in sogenannten Softforming- bzw. Postforminganlagen, da auch hier das Mineralöl als Träger einen nachteiligen Einfluss auf das Bearbeitungsergebnis hat.

Weiter ist ein fluides Mittel bekannt, das aus einer wässrigen alkoholischen Polyglykol-Lösung besteht (DE-B-103 43 441). Allerdings ist dieses Mittel ausschließlich für den Einsatz als Gleitmittel geeignet, um beispielsweise eine Reibung von Andruckwerkzeugen zu reduzieren.

Zwar würde auch dieses Mittel ein Anhaften von Kleber oder Leimresten an der Oberfläche der Platte bzw. dem Kantenbereich verhindern, jedoch führt der Anteil an Wasser dazu, dass sich durch eine notwendige Bearbeitung der Platte vor einem Durchlaufen der Heißzone Frässpäne und Staubpartikel im Kantenbereich der Platte ablagern. Nachfolgende Tastrollen, die vor Bearbeitungswerkzeugen positioniert sind, verschmutzen sehr stark, so dass eine präzise Bearbeitung der Platte nicht im gewünschten Maße gewährleistet ist.

Da das Wasser in den genannten Heißzonen nicht ausreichend verdunstet, werden Putzbürsten, mit denen die Platte nach dem Aufbringen der Kantenbeschichtung und der folgenden Bearbeitung gereinigt wird, übernässt. Dadurch bleibt eine Restfeuchte auf der Platte nach der Maschinenentnahme haften, was zu Wasserrändern führt. Diese stellen ebenso eine inakzeptable Qualitätsminderung dar, wie entstehende Verklebungen beim Stapeln der Platten.

Der Erfindung liegt die Aufgabe zugrunde, ein flüssiges Trennmittel der gattungsgemäßen Art so weiterzuentwickeln, dass seine Verwendungsfähigkeit verbessert wird.

Diese Aufgabe wird durch ein Trennmittel mit den Merkmalen des Anspruchs 1 gelöst.

Der fluide Träger für die zugesetzten Polyalkylenglykole, der erfindungsgemäß ohne einen Zusatz von Wasser ausschließlich aus Alkohol oder einer Mischung von Alkohol oder Kohlenwasserstoffen, vorzugsweise flüchtigen Kohlenwasserstoffen, oder Lösemitteln besteht, die jeweils hohe Verdunstungsraten aufweisen, führt dazu, dass nach dessen Verdunstung letztendlich die Polyalkylenglykole an der Oberfläche der Platte in den benetzten Bereichen haften bleiben, wobei sich diese Polyalkylenglykole durch eine hohe Affinität zu Kunststoffoberflächen auszeichnen.

Daneben ist der Siedepunkt der Polyalkylenglykole bzw. deren Flammpunkt höher als der des bislang eingesetzten Mineralöls, beispielsweise eines Weißöls, so dass das neue flüssige Trennmittel insbesondere auch für den Einsatz in den bereits erwähnten Heißzonen geeignet ist. Insofern stellt die Erfindung eine wesentliche Verbesserung der Verwendbarkeit dar. Hierzu zählt auch, dass das flüssige Trennmittel in Soft- bzw. Postforminganlagen eingesetzt werden kann, wo dies bislang, wie erwähnt, nicht möglich war.

Durch die sozusagen universelle Einsetzbarkeit des neuen Trennmittels ergeben sich naturgemäß erhebliche wirtschaftliche Vorteile, da einerseits die Nachbearbeitung einfacher und qualitativ hochwertiger ausführbar ist und andererseits die Ausschussquote der bearbeiteten Platten erheblich reduziert wird.

Nach einer vorteilhaften Weiterbildung der Erfindung bestehen die Polyalkylenglykole aus Polyethylenglykolen der allgemeinen Formel HO(CH₂CH₂O)ₙH mit mittleren Molmassen von ca. 200 bis 12000 g/Mol, und/oder Polypropylenglykolen der allgemeinen Formel HO(CHCH₃CH₂O)ₙH mit mittleren Molmassen von ca. 600 bis 4000 g/Mol und/oder Copolymerisaten von Propylenoxid und/oder Ethylenoxid mit mittleren Molmassen von ca. 1000 bis 8000 g/Mol.

Der Anteil der Polyalkylenglykole ist bevorzugt ≥ 1 %, vorzugsweise 20 % ≥ 1 %.

## Patentansprüche

1. Verwendung eines flüssigen Trennmittels mit einem fluiden Träger, zum Auftragen auf den mittels eines Klebers oder mittels Leim mit einer Beschichtung versehenen oder zu versehenden Kantenbereich einer Platte, vorzugsweise einer Möbelplatte, **dadurch gekennzeichnet, dass** das Trennmittel aus Polyalkylenglykolen und dem fluiden Träger besteht, der ohne Zusatz von Wasser aus Alkohol oder einer Mischung aus Alkoholen oder Kohlenwasserstoffen oder Lösemitteln gebildet ist.

2. Verwendung nach Anspruch 1, **dadurch gekennzeichnet, dass** dem fluiden Träger Polyethylenglykole der allgemeinen Formel HO(CH₂CH₂O)ₙH mit mittleren Molmassen von 200 bis 12000 g/Mol, und/oder Polypropylenglykole der allgemeinen Formel HO(CHCH₃CH₂O)ₙH mit mittleren Molmassen von 600 bis 4000 g/Mol und/oder Copolymerisate von Propylenoxid und/oder Ethylenoxid mit mittleren Molmassen von 1000 bis 8000 g/Mol beigemischt sind.

## Claims

1. Use of a liquid release agent with a fluid vehicle, for application to the edge region, which is provided or is to be provided with a coating by means of an adhesive or glue, of a panel, preferably of a furniture panel, **characterized in that** the release agent consists of polyalkylene glycols and the fluid vehicle, which is formed, without addition of water, from alcohol or from a mixture of alcohols or hydrocarbons or solvents.

2. Use according to Claim 1, **characterized in that** the fluid vehicle is admixed with polyethylene glycols of the general formula HO(CH₂CH₂O)ₙH having average molar masses of 200 to 12 000 g/mol, and/or with polypropylene glycols of the general formula HO(CHCH₃CH₂O)ₙH having average molar masses of 600 to 4000 g/mol, and/or with copolymers of propylene oxide and/or ethylene oxide having average molar masses of 1000 to 8000 g/mol.

## Revendications

1. Utilisation d'un agent anti-adhérent liquide comportant un support fluide, à appliquer sur la zone de bordure d'une plaque dotée ou à doter d'un revêtement au moyen d'un adhésif ou d'une colle, de préférence, une plaque de meuble, **caractérisée en ce que** l'agent anti-adhérent consiste en polyalkylène glycols et en support fluide qui est constitué, sans addition d'eau, d'alcool ou d'un mélange d'alcools ou d'hydrocarbures ou de solvants.

2. Utilisation selon la revendication 1, **caractérisée en ce que** l'on mélange au support fluide, des polyéthylène glycols de formule générale HO(CH₂CH₂O)ₙH présentant une masse molaire moyenne de 200 à 12000 g/mole et/ou des polypropylène glycols de formule générale HO(CHCH₃CH₂O)ₙH présentant une masse molaire moyenne de 600 à 4000 g/mole et/ou des copolymères d'oxyde de propylène et/ou d'oxyde d'éthylène présentant des masses molaires moyennes de 1000 à 8000 g/moles.
